# EUROPEAN PATENT SPECIFICATION

(11) **EP 1 091 140 B1**
(45) Date of publication and mention of the grant of the patent: **22.09.2004**
(21) Application number: 00308772.3
(22) Date of filing: 05.10.2000
(51) Int. Cl.: B60R 7/06, F16F 9/02

(54) **Air Damper**
Luftdämpfer
Amortisseur pneumatique

(30) Priority: 08.10.1999 JP 28755099
(43) Date of publication of application: 11.04.2001
(73) Proprietor: Piolax Inc., Yokohama-shi, Kanagawa-ken (JP)
(72) Inventor: Nakabayashi, Isao, Yokohama-shi, Kanagawa-ken (JP); Sawatani, Seiji, Yokohama-shi, Kanagawa-ken (JP)
(74) Representative: Abbie, Andrew Kenneth

(56) References cited:
- EP-A- 0 562 284
- US-A- 3 389 422
- US-A- 4 003 102
- US-A- 4 854 541
- US-A- 5 845 749

## Description

The present invention relates to improvement of a cylinder-type air damper to be employed for, for example, a glove box of an automobile.

There has been disclosed in Japanese Utility Model Registration Publication No. 2557064 a conventional air damper of such a structure.

The air damper is composed of a tubular cylinder with open ends, a piston which is connected with an end of a string for moving in the cylinder, a valve device which is installed at one end of the cylinder for controlling a passing amount of air, a guide cap which is installed at the other end of the cylinder for guiding the string, and a compressed coil spring which is interposed between the guide cap and the piston in the cylinder.

This conventional air damper has an advantage of ensuring smoothly opening or closing motion of a glove box. On the contrary, an amount of the string to be pulled out of the cylinder corresponds to a movement amount of the piston in the cylinder. Thus, in a place to be installed where the cylinder cannot take at a large length thereof, there is a disadvantage of not taking a necessary damper stroke.

EP-A-0562284 discloses an air damper according to the preamble of claim 1 appended hereto.

It is desirable to provide an air damper which allows an instalment space of a cylinder to be reduced.

The present invention provides an air damper comprising:
a tubular cylinder having a first end and a second end;
a piston movable in the cylinder for providing a damping function; and
a compression coil spring resiliently biasing the piston toward a first end in the cylinder, wherein a string for transmitting the damping function to an object is movable relative to the damper, the string slidingly engaging the piston and extending longitudinally of the cylinder.

Other preferred aspects of the invention are defined in the accompanying claims.

An embodiment of the invention, described in more detail hereinafter, shows an air damper as follows. In the air damper, a tubular cylinder has a first end and a second end. A piston is to be moved in the cylinder. A compressed coil spring resiliently biases the piston toward the first end in the cylinder. A string is for transmitting a damper function caused by a movement of the piston to a body to be moved. The string to be moved is applied over the piston so that it slidingly engages the piston and extends longitudinally of the cylinder.

The string has a first end fixed to a movable portion relative to an air damper body, and a second end fixed to the air damper body or an unmovable portion relative to the air damper body.

The air damper further includes a separating plate at a second end of an air damper body as an entrance and exit for the string. The string extends at both sides of the separating plate.

The piston has a hook body formed with a hook wall in a closed annular shape for applying the string over and supports the hook body to be rotated.

The cylinder is provided with an installment piece fixed to a fixed portion thereof, and a second end of the string is provided with a clip which is engaged with the installment piece and is fixed to the fixed portion together with the installment piece.

The piston has a rotatable hook body. The string is applied over the hook body.

According to the invention, the string to be moved is applied over the piston, and, comparing with conventional ones, even in a small-sized air damper, an amount of the string to be pulled out of the cylinder is further long, thus providing a necessary damper stroke.

The first end of the string is fixed to an object movable relative to the air damper body and the second end is fixed to the air damper body or an unmovable portion relative to the air damper body, so that, comparing with conventional dampers, even in a small-sized air damper, an amount of the string to be pulled out of the cylinder is longer, thus providing a necessary damper stroke.

The separating plate is provided at a second end of an air damper body as an entrance and exit for the string, so that a twist of the string outside the air damper body is prevented from spreading inside the air damper body, and a twist in the air damper body is adjusted by pulling the string.

The string is applied over the closed annular hook wall of the hook body, so that the string can not be detached from the hook body, and the hook body rotates relative to the piston to further effectively adjust a twist of the string in the cylinder.

The second end of the string is provided with the clip, and the second end of the string is easily connected to the installment piece on a side of the cylinder.

In order that the present invention may be well understood an embodiment thereof, which is given by way of example only, will now be described with reference to the accompagnying drawings, in which :
Fig. 1 is an exploded perspective view of an air damper of an embodiment according to the invention;
Fig. 2 is an exploded perspective view showing a relationship of a piston and a hook body;
Fig. 3 is a sectional view showing a state where a hook body to be rotated is supported to a piston;
Fig. 4 is a cross sectional view of a guide cap; and
Fig. 5 is a front view partially broken away showing an assembled air damper.

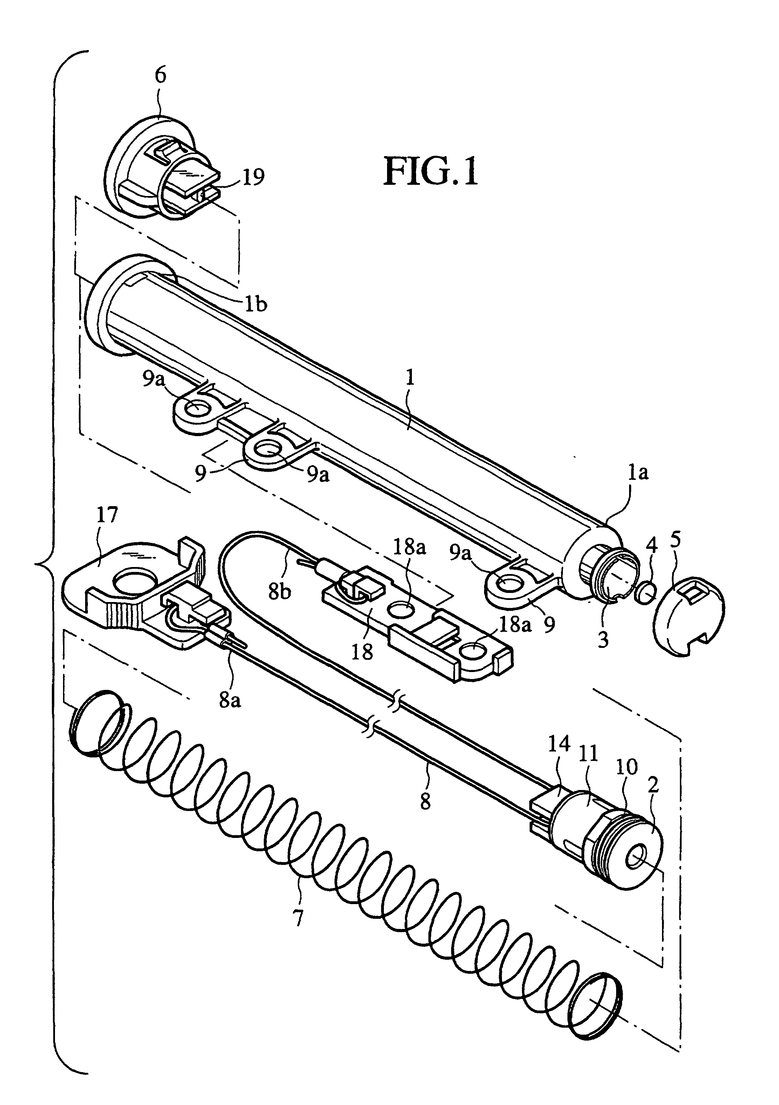

As shown on Fig. 1, an air damper is composed of a tubular cylinder 1 with open ends, a piston 2 to move in the cylinder 1, an end cap with a valve 4 for opening or closing a through hole 3 for air pressure controlling which is opened at first end 1a of the cylinder 1, a guide cap 6 for guiding a movement of a string 8 as will be described later at the second end 1b of the cylinder 1, a compressed coil spring interposed between the guide cap 6 and the piston 2 for resiliently biasing the piston 2 toward the first end 1a of the cylinder 1, and a string 8 for transmitting a damper function caused by a movement of the piston 2 to a body to be moved such as a glove box. These parts constitute an air damper body.

The cylinder 1 has installment pieces 9 with screwed holes 9a longitudinally extending integrally at respective outer surfaces close to the first end 1a and the second end 1b thereof. Particularly, doubled installment pieces 9 on the second end 1b is to be engaged with a second clip 18 which is fixed to a second end 8b of the string 8 as will be described later, thus to be fixed to a portion of the cylinder 1 with the second clip 18.

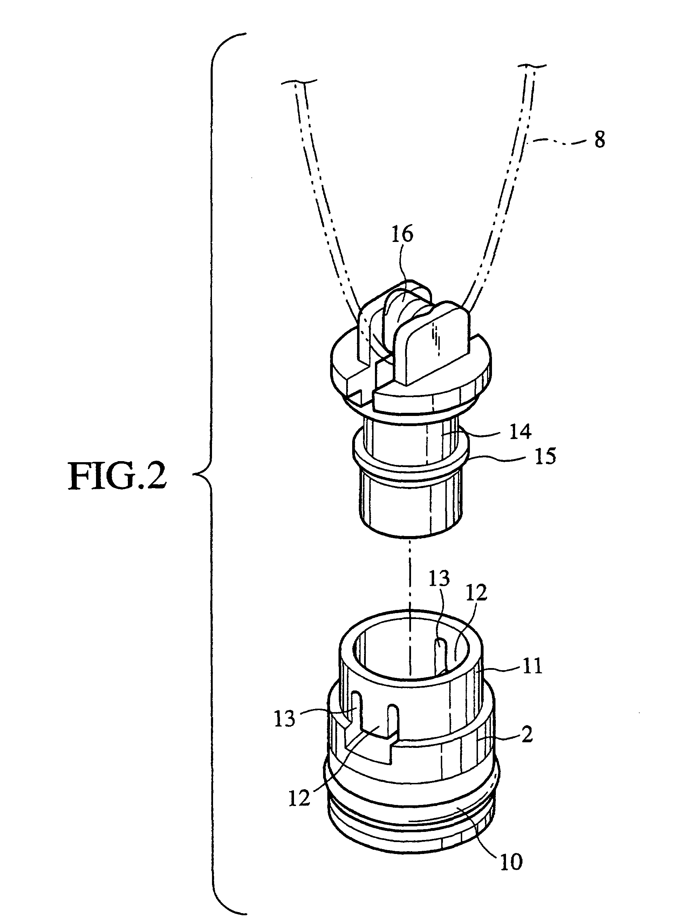

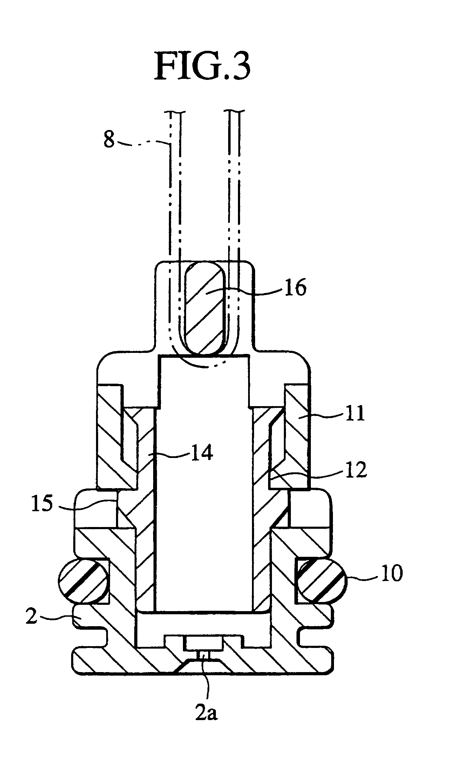

The piston 2 has an O-ring 10 fitted in a circumferential face thereof. As shown on Figs. 2 and 3, on a side to be combinedly used as an installment seat of the coil spring 7, it has the tubular connecting part 11 extending integrally therewith. The tubular connecting part 11 has a pair of resilient lock-pawls 12 formed on opposed side walls via slits 13. With the connecting part 11, the lock-pawls 12 engages into locking state, and a hook body 14 to be described later is rotatably supported.

The hook body 14, as shown on the Fig.3, has a cylindrical shape with a hollow inside part. It has an annular projection 15 formed at a central part thereof for engaging with the lock-pawls 12 to be locked. It has a closed annular hook wall 16 formed on a rear end for applying a folded portion of the string 8 to be moved over the hook wall 16.

The string 8 to be moved is engaged over the hook wall 16 to allow sliding movement of the string over the hook wall. Thus a folded length of string extends, in a longitudinal direction of the cylinder 1. A first end 8a thereof is secure to a first clip 17 to be fixed on a side face of a glove box of an automobile. A second end 8b thereof is secured to a second clip 18 to be engaged with the installment piece 9. Particularly, the second clip 18 has a screwed hole 18a to be engaged with the above-described installment piece 9 and corresponds to the screwed hole 9a of the installment piece 9.

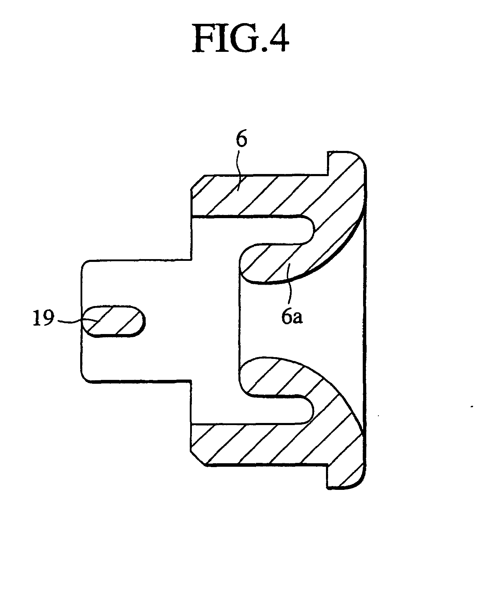

The guide cap 6 fitted in the second end 1b of the cylinder 1, as shown on Fig. 4, has an arc-shaped guide face 6a for guiding the string 8. Inside the second end 1b of the cylinder 1, a separating plate 19 is provided integrally, and the string 8 extends at both sides of the separating plate 19.

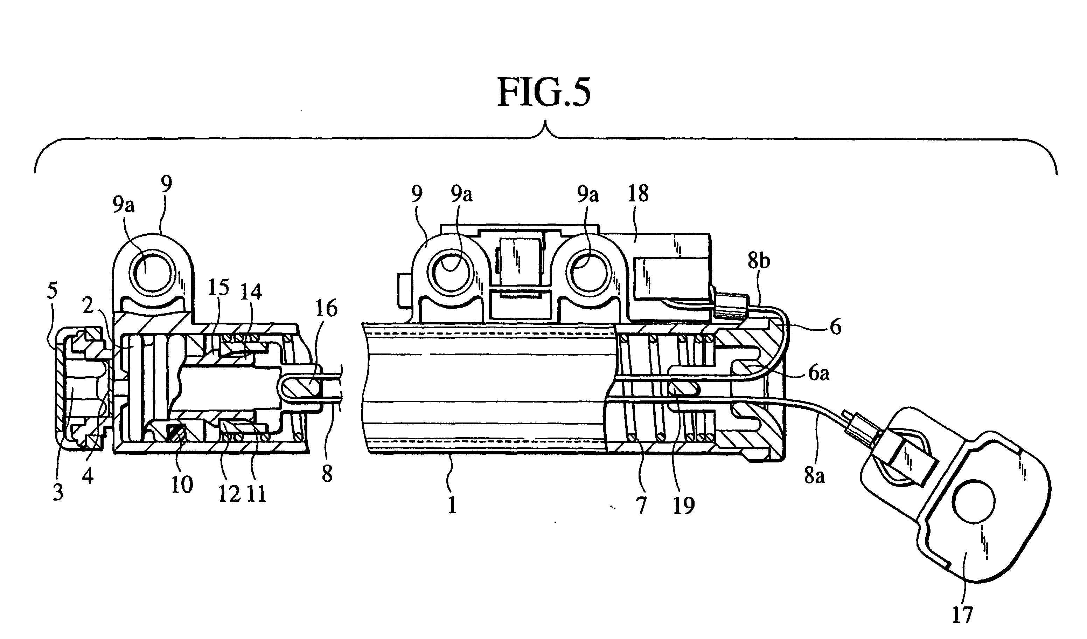

When assembling the air damper with the constitution, at first, the string 8 is applied over the hook wall 16 configured in a closed annular shape, being folded. The hook body 14 is fitted into the tubular connecting part 11 of the piston 2, and the piston 2 is pushed in the cylinder 1 with the coil spring 7. While pulling the first end 8a and the second end 8b of the folded string 8 through the guide cap 6, the guide cap 6 is fitted in the second end 1b of the cylinder 1. The first end 8a of the string 8 is secured to the first clip 17 and the second end 8b of the string 8 is secured to the second clip 18. The second clip 18 is engaged with the installment piece 9 of the cylinder 1, and, as shown on Fig. 5, the air damper of one-way method is easily assembled.

In the case of employment for a glove box of an automobile, in the same conventional manner, the cylinder 1 is fixed to an instrument panel side by screwing its installment piece 9 and the second clip 18 as not specifically shown in Figs. While pulling the first end 8a of the string 8 extending from the guide cap 6, the first end 8a is connected to the glove box side by the first clip 17, thus securing opening or closing motion of the glove box. In the operation for connecting to the glove box, the string 8 is movably applied over the hook body 14 of the hook wall 16, extending longitudinally of the cylinder 1, and a pulled-out amount of the first end 8a of the string 8 is approximately twice as long as movement amount of the piston 2. Thus, if it is employed for ones whose installment space for the air damper body is limited and, in addition, which require a comparatively long stroke, comparing with a conventional air damper with a longitudinal length identical to the cylinder 1, a twice longer damper stroke is obtained, so that a sufficient correspondence can be performed.

When the glove box is moved in an opening direction, according to the movement, the string 8 is pulled gradually out of the cylinder 1, and the piston 2 is moved in the same direction against a spring pressure of the coil spring 7. As a result, by a flow resistance of air passing through an orifice 2a, a damper effect is obtained, and it is ensured that the glove box is moved slowly toward open state.

On the other hand, when the glove box is moved in a closing direction, the piston 2 is forced to be pushed back in the cylinder 1 with the string 8 by a spring pressure of the coil spring 7.

An air which has been accumulated in the cylinder 1 is relieved from the end cap 5 to outside through the hole 3 opened by the valve 4. Thus, the piston 2 moves quickly in the cylinder 1, and a closing motion of the glove box is accelerated.

When opening or closing the glove box, the separating plate 19 is on the second end 1b of the cylinder 1 corresponding to an entrance and exit of the string 8. A twist of the string 8 outside the cylinder 1 is prevented from spreading in the cylinder 1 and a twist of the string 8 in the cylinder 1 is adjusted by pulling the string 8. In addition, the string 8 is applied over the closed annular hook wall 16 of the hook body 14, so that the string 8 can not detach from the hook body 14 and that rotating the hook body 14 relative to the piston 2 allows the twist of the string 8 in the cylinder 1 to be adjusted further effectively.

In the above-described embodiment, the cylinder 1 is fixed to the instrument panel side and the first end 8a of the string 8 is connected to a glove box side as a movable body. On the contrary, the cylinder 1 may be fixed to the glove box side and the first end 8a of the string 8 may be connected to the instrument panel side as a peripheral portion of the glove box, according to practice. Without being connected to the installment piece 9, the second end 8b of the string 8 can be connected to a portion for fixing the cylinder 1 itself. In addition, as shown by the embodiment, connecting the second end 8b of the string 8 to the cylinder 1 by the second clip 18 makes its connection operation much easier. The second end 8b of the string 8 can be connected to the guide cap 6 or its separating plate 19.

Although the invention has been described above by reference to certain embodiments of the invention, the invention is not limited to the embodiments described above. Modifications and variations of the embodiments described above within the scope of the appended claims will occur to those skilled in the art, in light of the above teachings.

## Claims

1. An air damper comprising:
a tubular cylinder (1) having a first end (1a) and a second end (1b);
a piston (2) movable in the cylinder (1) for providing a damping function; and
a compression coil spring (7) resiliently biasing the piston (2) toward the first end (1a) in the cylinder (1), a string (8) for transmitting the damping function to an object is movable relative to the damper,
**characterized in that** the string (8) is slidingly engaging the piston (2) and extending longitudinally of the cylinder (1).

2. A damper according to claim 1,
wherein the string (7) has a first end (8a) fixed to the movable object, and a second end (8b) fixed to the damper or a portion fixed relative to the damper.

3. A damper according to claim 1, fluther comprising:
a separating plate (19) located at a second end (1b) of the cylinder (1),
wherein the string (8) extends at both sides of the separating plate (19) and exits from the second end (1b).

4. A damper according to claim 1,
wherein the piston (2) has a hook body (14) formed with a hook wall (16) in a closed annular shape for slidingly engaging with the string (8) and
wherein the piston (2) rotatably supports the hook body (16).

5. A damper according to claim 1,
wherein the cylinder (1) is provided with an instalment piece (9) fixed to a fixed portion thereof, and a second end (8b) of the string (8) is provided with a clip (18) which is engaged with the instalment piece (9) and is fixed to the fixed portion together with the instalment piece (9).

6. A damper according to claim 1,
wherein the piston (2) has an orifice (2a) communicating with the first and second ends (1a, 1b) of the cylinder (1).

7. A damper according to claim 6,
wherein the orifice (2a) resists the passage of fluid therethrough when the string (8) pulls the piston (2) toward the second end (1b) of the cylinder (1).

8. A damper according to claim 6,
wherein the cylinder (1) includes a valve (4) at the first end (1a) of the cylinder (1), and the valve (4) is opened to discharge a fluid when the spring (7) moves the piston (2) toward the first end (1a) of the cylinder (1).

## Patentansprüche

1. Luftdämpfer, umfassend:
einen rohrförmigen Zylinder (1), welcher ein erstes Ende (1a) und ein zweites Ende (1b) aufweist;
einen Kolben (2), welcher im Zylinder (1) zum Bereitstellen einer Dämpfungsfunktion beweglich ist; und
eine Druckschraubfeder (7), welche den Kolben (2) elastisch in Richtung des ersten Endes (1a) im Zylinder (1) ausrichtet, wobei eine Schnur (8) zum Übertragen der Dämpfungsfunktion auf einen Gegenstand relativ zum Dämpfer beweglich ist, **dadurch gekennzeichnet, dass** die Schnur (8) auf gleitende Weise den Kolben (2) in Eingriff hat und sich in Längsrichtung des Zylinders (1) erstreckt.

2. Dämpfer nach Anspruch 1,
wobei die Schnur (8) ein erstes Ende (8a), welches am beweglichen Gegenstand befestigt ist, und ein zweites Ende (8b) aufweist, welches am Dämpfer oder einem Abschnitt befestigt ist, der seinerseits relativ zum Dämpfer befestigt ist.

3. Dämpfer nach Anspruch 1, des Weiteren umfassend:
eine Trennplatte (19), welche an einem zweiten Ende (1b) des Zylinders (1) angeordnet ist,
wobei sich die Schnur (8) an beiden Seiten der Trennplatte (19) erstreckt und vom zweiten Ende (1b) austritt.

4. Dämpfer nach Anspruch 1,
wobei der Zylinder (2) einen Hakenkörper (14) aufweist, welcher mit einer Hakenwand (16) in einer geschlossenen ringförmigen Gestalt zum gleitenden Eingriff mit der Schnur (8) ausgebildet ist, und wobei der Kolben (2) drehbar den Hakenkörper (16) trägt.

5. Dämpfer nach Anspruch 1,
wobei der Zylinder (1) mit einem Einbaustück (9) ausgestattet ist, welches an einem feststehenden Abschnitt desselben befestigt ist, und ein zweites Ende (8b) der Schnur (8) mit einer Haltevorrichtung (18) ausgestattet ist, welche mit dem Einbaustück (9) in Eingriff gebracht ist und am feststehenden Abschnitt gemeinsam mit dem Einbaustück (9) befestigt wird.

6. Dämpfer nach Anspruch 1,
wobei der Kolben (2) eine Öffnung (2a) aufweist, welche mit dem ersten und dem zweiten Ende (1a, 1b) des Zylinders (1) kommuniziert.

7. Dämpfer nach Anspruch 6,
wobei die Öffnung (2a) dem Durchgang von Fluid ebendort hindurch widersteht, wenn die Schnur (8) den Kolben (2) in Richtung des zweiten Endes (1b) des Zylinders (1) zieht.

8. Dämpfer nach Anspruch 6,
wobei der Zylinder (1) ein Ventil (4) am ersten Ende (1a) des Zylinders (1) umfasst und das Ventil (4) geöffnet ist, um ein Fluid ausfließen zu lassen, wenn die Feder (7) den Kolben (2) in Richtung des ersten Endes (1a) des Zylinders (1) bewegt.

## Revendications

1. Amortisseur à air comprenant :
un cylindre tubulaire (1) ayant une première extrémité (1a) et une deuxième extrémité (1b) ;
un piston (2) mobile dans le cylindre (1) pour fournir une fonction d'amortissement ; et
un ressort hélicoïdal de compression (7) qui sollicite de manière élastique le piston (2) vers la première extrémité (1a) dans le cylindre (1), un cordon (8) pour transmettre la fonction d'amortissement à un objet est mobile par rapport à l'amortisseur, **caractérisé en ce que** le cordon (8) se met en prise avec le piston (2) de manière coulissante et s'étend dans le sens longitudinal du cylindre (1).

2. Amortisseur selon la revendication 1, dans lequel le cordon (8) a une première extrémité (8a) fixée à l'objet mobile, et une deuxième extrémité (8b) fixée à l'amortisseur ou à une partie fixe par rapport à l'amortisseur.

3. Amortisseur selon la revendication 1, comprenant en outre :
une plaque de séparation (19) située en une deuxième extrémité (1b) du cylindre (1),
dans lequel le cordon (8) s'étend des deux côtés de la plaque de séparation (19) et sort par la deuxième extrémité (1b).

4. Amortisseur selon la revendication 1, dans lequel le piston (2) a un corps de crochet (14) muni d'une paroi de crochet (16) de forme annulaire fermée pour se mettre en prise de manière coulissante avec le cordon (8) et dans lequel le piston (2) supporte à rotation le corps de crochet (14).

5. Amortisseur selon la revendication 1, dans lequel le cylindre (1) est muni d'une pièce d'installation (9) fixée à une partie fixe de celui-ci, et une deuxième extrémité (8b) du cordon (8) est munie d'une attache (18) qui est en prise avec la pièce d'installation (9) et est fixée à la partie fixe en même temps que la pièce d'installation (9).

6. Amortisseur selon la revendication 1, dans lequel le piston (2) comporte un orifice (2a) qui communique avec les première et deuxième extrémités (1a, 1b) du cylindre (1).

7. Amortisseur selon la revendication 6, dans lequel l'orifice (2a) résiste au passage de fluide lorsque le cordon (8) tire le piston (2) vers la deuxième extrémité (1b) du cylindre (1).

8. Amortisseur selon la revendication 6, dans lequel le cylindre (1) comprend une soupape (4) à la première extrémité (1a) du cylindre (1), et la soupape (4) est ouverte pour décharger un fluide lorsque le ressort (7) déplace le piston (2) vers la première extrémité (1a) du cylindre (1).
